# EUROPEAN PATENT APPLICATION

(11) **EP 1 137 279 A1**
(43) Date of publication of application: **26.09.2001**
(21) Application number: 00400493.3
(22) Date of filing: 23.02.2000
(51) Int. Cl.: H04N 5/926, H04N 5/93

(54) **Process for controlling a video cassette recorder (VCR) with an analog unit and a digital unit**

(71) Applicant: THOMSON multimedia, 92100 Boulogne Billancourt (FR)
(72) Inventor: Dumont, Frank, Thomson Multimedia, 92648 Boulogne Billancourt cedex (FR); Tan, Chee Lam, Thomson Multimedia, 92648 Boulogne Billancourt cedex (FR)
(74) Representative: Bonnans, Arnaud

(57) **Abstract**

A process for controlling a video cassette recorder with an analog recording and reproducing unit (14) having an output for a first baseband analog video signal and a digital recording and reproducing unit (16) is proposed.

The video cassette recorder comprises a path switch (22) allowing connection of the output of the analog unit (14) to the input of the digital unit (16) and a monitor switch (18) to selectively connect the output of the analog unit (14) or the output of the digital unit (16) to an output of the monitor switch (18) connectable to a display (20).

To improve image quality, the process includes following steps :
- instructing digital processing means (34) of the digital unit (16) to generate a still picture when a pause signal is received ;
- instructing the monitor switch (18) to connect the output of the analog unit (14) to the output of the monitor switch (18) when a search signal is received.

## Description

The invention relates to a process for controlling a video cassette recorder (VCR) with an analog unit and a digital unit.

A known solution for a video recorder, disclosed for instance in U.S. patent No. 5 504 632 and European patent application No. 0 671 855, has the general structure represented in figure 1. A video signal (for instance CVBS) from an analog source 2 is transmitted to both an analog recording and reproducing unit 4 and a digital recording and reproducing unit 6.

The analog recording and reproducing unit 4 can record the video signal from the analog source 2 on a tape according to a given analog standard, *i*.*e*. without digitisation, for instance according to the VHS or S-VHS format.

The digital recording and reproducing unit 6 can record the video signal from the analog source 2 on the tape according to a given digital standard, for instance D-VHS. The digital recording and reproducing unit 6 generally comprises an analog-to-digital converter to digitise the analog signal from the analog source 2 and some means to convert the digitised signal into a bit stream to be recorded on the tape.

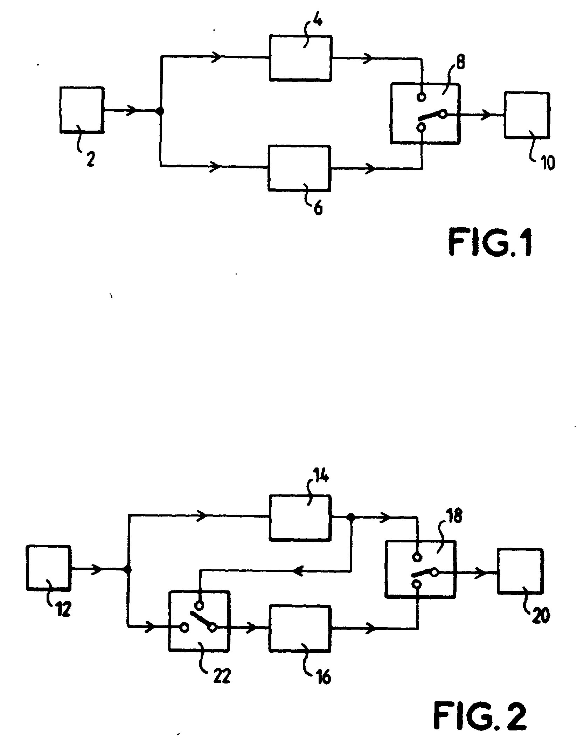

The VCR also comprises a micro-processor (not shown on figure 1) through which the user can select which one of the two units 4, 6 he wants to use in the recording mode (choice between analog and digital recording). The VCR also comprises detection means (not shown) to detect the type of signal on a recorded tape in order to select the analog recording and reproducing unit 4 or the digital recording and reproducing unit 6 during reproduction of the recorded tape. A solution for such detection means is for instance described in European patent application No. 0 671 855.

Depending on the output of the detection means, the micro-processor will control a monitor switch 8 in order to connect a display 10 (where the recorded video signal is to be watched) to the analog recording and reproducing unit 4 or to the digital recording and reproducing unit 6.

As will be explained below with further details, when a pause mode is used in operating the analog recording and reproducing unit 4, the image has a resolution of half the corresponding standard resolution.

The invention aims at obtaining an image with full resolution when a video reproducing of a tape recorded according to an analog interlaced format (VHS or S-VHS) is paused. The invention also seeks not to jeopardise the quality of other trick modes (forward search, backward search).

It is proposed a process for controlling a video cassette recorder with :
- an analog recording and reproducing unit having an output for a first baseband analog video signal;
- a digital recording and reproducing unit having an input for a second baseband analog video signal and digital processing means generating on an output of said digital unit a third baseband analog video signal;
- a path switch allowing connection of the output of the analog unit to the input of the digital unit,
including the step of :
- instructing the digital processing means to generate a still picture.

It is also proposed that the process includes the successive steps of:
- instructing the digital processing means to generate a still picture ;
- instructing the drum unit to stop the tape motion.

Further interesting features of the invention are the following :
- the video cassette recorder comprises a micro-processor and the step of instructing the digital processing means to generate a still picture takes place immediately when a pause signal is received by the micro-processor;
- the video cassette recorder further comprises a monitor switch to selectively connect the output of the analog unit or the output of the digital unit to an output of the monitor switch connectable to a display, and the process further includes the step of instructing the monitor switch to connect the output of the digital unit to the output of the monitor switch when a pause signal is received by the micro-processor;
- the video cassette recorder comprises a micro-processor, the digital processing means comprises a video encoder and the step of instructing the digital processing means to generate a still picture is realised by an instruction from the micro-processor to the video encoder;
- the video cassette recorder comprises a micro-processor, the digital processing means comprises a MPEG decoder and the step of instructing the digital processing means to generate a still picture is realised by an instruction from the micro-processor to the MPEG decoder;
- the video cassette recorder comprises a micro-processor and a monitor switch to selectively connect the output of the analog unit or the output of the digital unit to an output of the monitor switch connectable to a display and the process includes the step of instructing the monitor switch to connect the output of the analog unit to the output of the monitor switch when a search signal is received by the micro-processor.

Embodiments of the invention will now be described with reference to the attached figures, where :
- figure 1 is the general structure of the signal processing in a video apparatus of the prior art, as already explained ;
- figure 2 represents the general structure of a VCR according to the invention ;
- figure 3 represents a first detailed embodiment of the invention ;
- figure 4a represents a second detailed embodiment;
- figure 4b represents a first screen allowing the user to input his instructions;
- figure 4c represents a second screen allowing the user to input his instructions ;
- figure 4d represents the main elements allowing the user's instructions to be entered and implemented ;
- figure 5 represents some elements of the second embodiment;
- figure 6a represents a tape recorded according to the VHS standard ;
- figure 6b represents schematically a first half of an image read from a VHS tape;
- figure 6c represents schematically the second half of the image of figure 6b;
- figure 6d represents schematically the image of figure 6b;
- figure 6e represents the image of figure 6b in pause mode in a conventional analog VCR;
- figure 6f represents schematically the image of figure 6b in pause mode in a VCR according to the invention.

The general structure of a VCR according to the invention is represented at figure 2.

The VCR comprises two main processing parts : an analog recording and reproducing unit 14 (in short analog unit) and a digital recording and reproducing unit 16 (in short digital unit), which will be described with further details below.

An analog source 12 (for instance a tuner and a demodulator) generates a baseband composite video signal (CVBS), which is an analog signal. The video signal from the source 12 is transmitted to the analog unit 14 on the one hand and to a switch 22 (called path switch from now on) on the other hand. In a first position, the path switch 22 allows connection of the analog source 12 to the input of the digital unit 16 in order to record digitally the analog signal from the analog source 12.

The output of the digital unit 16 and the output of the analog unit 14 are both connected to a monitor switch 18 in order to select which one of the signals from the digital unit 16 and from the analog unit 14 will be sent to the display 20 for watching.

The output of the analog unit 14 is also linked to the path switch 22, which allows to connect the output of the analog unit 14 to the input of the digital unit 16. Hence, when playing back (*i. e*. reproducing) an analog recorded tape (VHS or S-VHS format), the user can choose between the two following possibilities :
- connecting, thanks to the monitor switch 18, the output of the analog unit 14 to the display 20, thus reproducing the VHS tape in a conventional way ;
- connecting, thanks to the path switch 22, the output of the analog unit 14 to the input of the digital unit 16 and connecting, thanks to the monitor switch 18, the output of the digital unit 16 to the display 20, thus allowing the analog signal from the VHS tape to go through the digital unit 16 where full advantage of the digital circuits can be taken.

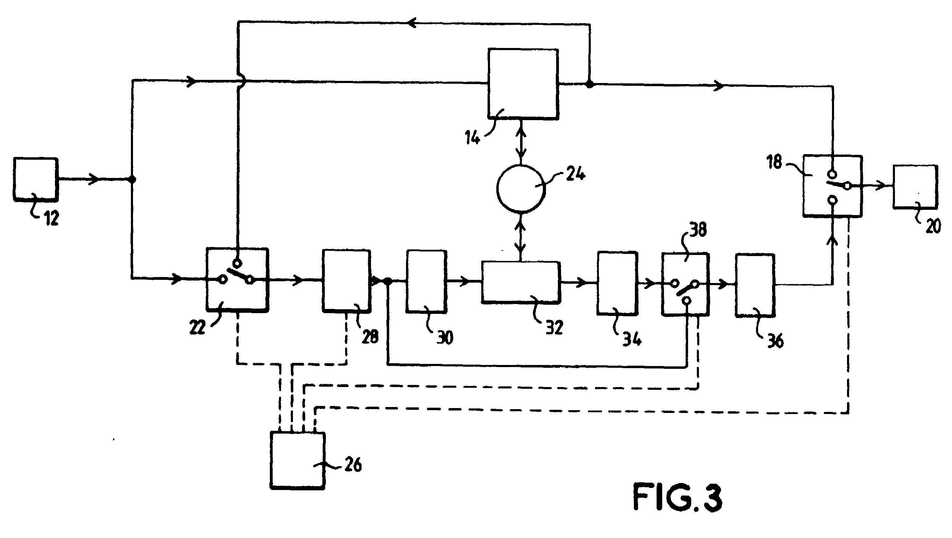

The choice (for instance through menus) is implemented by the micro-processor 26 (figure 3b) which stores the wishes of the user and controls the path switch 22 and the monitor switch 18 accordingly. An example of such process is described below.

The various parts of the digital unit 16 are represented in figure 3. A drum unit 24 mainly comprising a drum carrying magnetic heads to record or reproduce a magnetic signal on the tape is connected via a bi-directional link to a bit-stream processor 32. It can be noticed that the drum unit 24 is also linked to the analog unit 14 as this drum unit 24 is used for recording and reading signals according to both analog and digital standards.

The bit-stream processor 32 is a circuit which allows conversion of a compressed video signal composed of bytes according to the MPEG-II format into a bit stream and vice versa. It should be pointed out that in the figures the links between circuits are represented by a simple line for clarity, even when on the actual circuit they would consist of a plurality of wires, for instance to define a byte. Similarly, in the present application, a video signal can be composed of a plurality of electrical signals (like for a S-Video signal or a RGB-signal).

The digital unit 16 comprises a video decoder 28 receiving an analog signal from the path switch 22, which is either the analog signal from the analog source 12 or the analog signal from the output of the analog unit 14, as explained above. A suitable video decoder is the Philips SAA7114 IC. The video decoder 28 realises mainly analog-to-digital conversion and, when receiving a CVBS signal from the path switch 22, luminance/chrominance separation (thus obtaining Y, C signals). The video decoder 28 also realises separation of the two chrominance components U and V. The CVBS input signal can be of the NTSC-, of the PAL- or of the SECAM-type ; known video decoders, such as SAA7114, can cope with any of these norms.

The video decoder 28 outputs a digital stream, and more precisely a stream of 8-bit bytes in 4:2:2, that is 4 bytes for the luminance information (Y), 2 bytes for the first chrominance component (U) and 2 bytes for the second chrominance component (V).

The video decoder 28 comprises filters, some of which are used for the above-mentioned separations of signals (for instance a comb-filter for luminance/chrominance separation), other ones allowing video signal processing such as chroma saturation control or luminance contrast and brightness control. The filters are adaptive, which means that their parameters are controlled by the micro-processor 26, through a serial I²C-bus (represented by a dotted line).

Another example of a video decoder with adaptive filters is given by U.S. patent No. 5 621 478.

The 4:2:2 output of the video decoder 28 is sent to a MPEG encoder 30 and to a digital switch 38 through a by-pass. The MPEG encoder 30 (MPEG II encoder more precisely) provides conversion of the 4:2:2 digital stream into a MPEG digital stream, which is then sent to the bit-stream processor 32. The corresponding bit-stream is then sent to the drum unit 24 to be recorded according to a digital standard on the tape.

The bit-stream processor 32 is also linked to a MPEG decoder 34 which converts back the MPEG II data stream from the bit-stream processor 32 corresponding to data read on the tape into a 4:2:2 digital stream. This 4:2:2 digital stream is then output to the digital switch 38.

The digital switch 38 allows to select which digital stream will be coded into an analog signal, *i.e.* which digital stream will be sent to a video encoder 36, whether the digital stream from the video decoder 28 or the digital stream from the MPEG decoder 34. The analog signal output from the video encoder 36 will be sent to the monitor switch 18 for possible display as described above.

The digital unit 16 thus has 2 modes of operation :
- when reading a digitally recorded tape (D-VHS), the bit-stream will go through the bit-stream processor 32, the MPEG decoder 34 and the digital switch 38 is in a position where the signal is forwarded to the video encoder 36 ;
- when reading an analog tape (VHS or S-VHS), the user can choose as mentioned above to input the analog signal from the analog unit 14 to the video decoder 28 via the path switch 22; the digital switch 38 then allows direct connection of the 4:2:2 output of the video decoder 28 to the input of the video encoder 36 ; the output analog signal is transmitted to the display through correct positioning of the monitor switch 18 as already described above.

In the last mode, the analog VHS or S-VHS signal will then go through the high quality filters provided in the video decoder 28, thus leading to picture enhancement. Moreover, the filters can be easily programmed, for instance through menus where the user can select the main parameters of the filters, the micro-processor 26 sending the corresponding information to the video decoder 28.

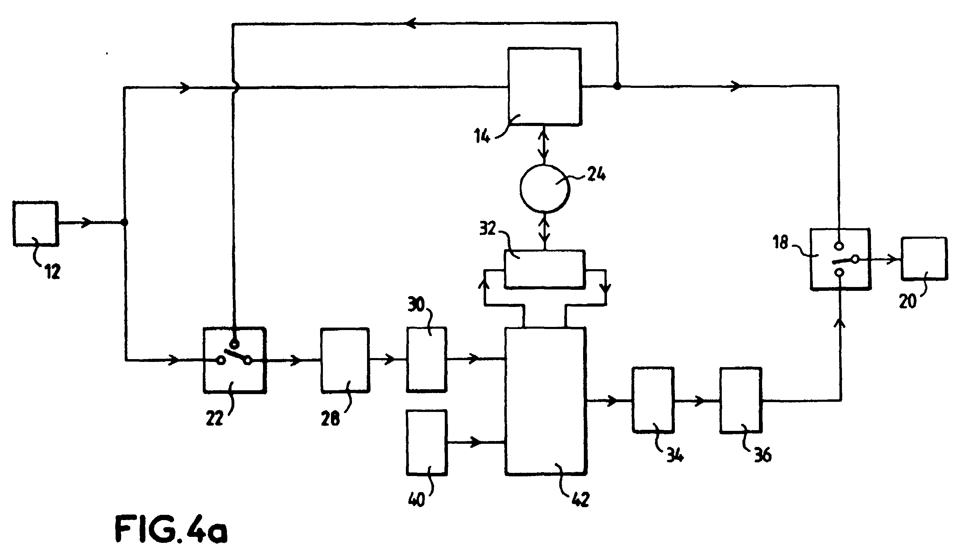

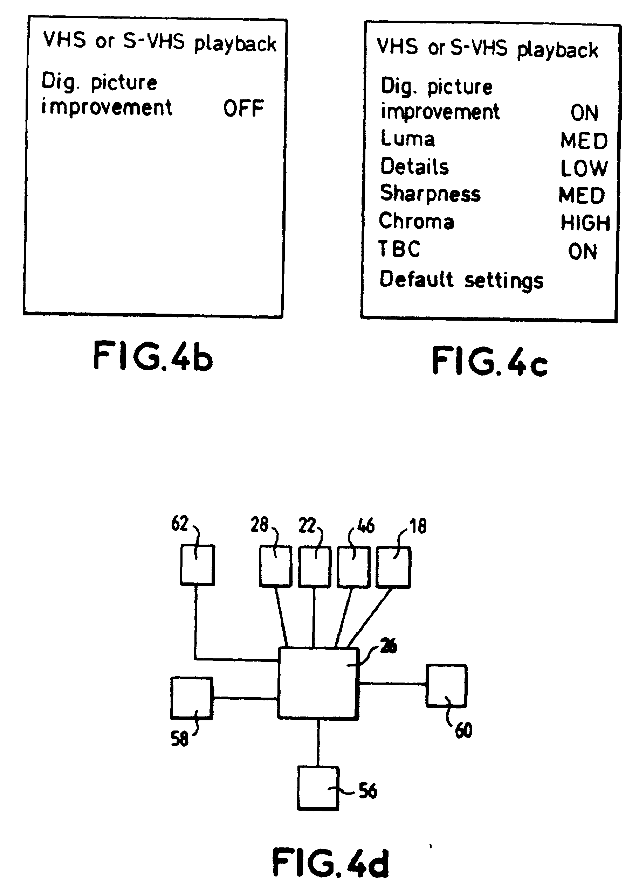

Figure 4a represents a second embodiment, which has the same general structure as disclosed in figure 2, but which differs from figure 3 in its detailed implementation. However, the elements which are identical to those of figure 3 have the same numerical reference and will not be described once again.

As in figure 2, a path switch 22 allows to connect the input of the digital unit 16 (and more precisely the input of the video decoder 28) selectively to the output of the analog source 12 or to the output of the analog unit 14.

The video decoder 28 is connected to the MPEG encoder 30 for transmission of the 4:2:2 digital stream, which is then converted by the MPEG encoder 30 into a first MPEG digital stream. The first MPEG digital stream is output from the MPEG encoder 30 to a multiplexer 42. The multiplexer 42 also receives a second MPEG digital stream from a digital tuner 40.

The multiplexer 42 is also connected to both the input and the output of the bit-stream processor 32. Alternatively, the connections between the multiplexer 42 and the bit-stream processor 32 could be implemented through a bi-directional link (as data processed in the bit-stream processor 32 can only go one way at a time, no simultaneous reading and recording on a tape being possible).

The multiplexer 42 has a separate output connected to the MPEG decoder 34 to convert a third MPEG digital stream, selected by multiplexer 42, into a 4:2:2 digital stream. The output of the MPEG decoder 34 is then connected to a video encoder in order to generate an analog video signal, which can be displayed, from the 4:2:2 digital stream.

As in the previous embodiment, the output of the video encoder 36 is connected to a monitor switch 18 to allow the display 20 to receive signal from the analog unit 14 or from the digital unit 16.

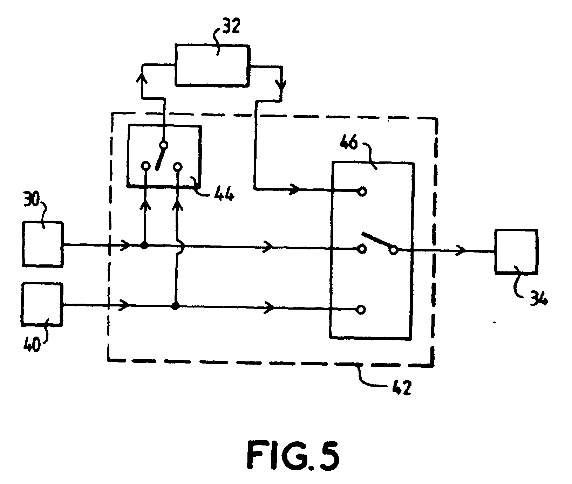

The multiplexer 42 allows to connect selectively the MPEG encoder 30 or the digital source 40 to the bit-stream processor 32 (for recording) and to connect selectively the bit-stream processor 32 or the MPEG encoder 30 or the digital source 40 to the MPEG decoder 34 (for display), as will be described now with more details with reference to figure 5.

The multiplexer 42 mainly comprises two switches : a first switch 44 and a second switch 46. The first switch 44 receives the first and the second MPEG digital streams and selects which of these two streams is sent to the bit-stream processor 32 in order to be recorded on the tape. The second switch 46 also receives the first and second MPEG digital streams, and in addition, the MPEG digital stream output from the bit-stream processor 32 (*i*.*e*. information read from the tape during playback). The second switch 46 selects which one of the MPEG digital stream it receives is sent to the MPEG decoder 34 as a third MPEG digital stream, which represents images to be displayed on the display 20.

The first and second switches 44, 46 are controlled by the micro-processor according to the wishes of the user. The multiplexer 42 not only allows to select which MPEG digital stream should be recorded or which MPEG digital stream should be displayed ; the multiplexer 42 also allows simultaneous recording of any of the first and second MPEG digital streams and displaying of the other one of the first and second digital streams.

The multiplexer 42 can thus directly connect the MPEG encoder 30 to the MPEG decoder 34, thanks to the second switch 46. This is particularly interesting when the path switch 22 is positioned so as to input the analog signal from the analog unit 14 to the video decoder 28 and the monitor switch 18 connects the display 20 to the video encoder 36. In this case, the analog signal read from a VHS tape follows the following path : path switch 22, video decoder 28, MPEG encoder 30, multiplexer 42, MPEG decoder 34, video encoder 36, monitor switch 18, display 20.

The following integrated circuits can be used :
- Philips SAA7114 as video decoder;
- NEC uPD61050 as MPEG II encoder;
- Philips SAA6700H as bit-stream processor;
- SGS - Thomson STI5500 as combined MPEG II decoder and video encoder.

In the various encoders and decoders, the video signal can be processed under the control of instructions coming from the micro-processor, notably for picture improvement. For instance, time base correction is automatically realised, thus leading to a more stable picture. Another example of such control of the VCR of figure 4a following the user instructions through menus will now be described with reference to figure 4b to 4d.

In a first period of time, the user enters his preferences regarding the operation of the VCR. The user activates a remote control which signals are received by a receiver 58 and forwarded to the micro-processor 26, which accordingly
(a) changes the menus to be displayed on display 20 through a conventional on-screen display (OSD) processor 60 or
(b) changes the value of an operation parameter in a memory 56.
   To control the various possibilities of the circuit of figure 4a, the process is for instance the following :
   - displaying an OSD menu proposing whether to use or not to use digital picture improvement (figures 4b and 4c);
   - waiting for an instruction from the user, notably from the receiver 58 ;
   - if the user instructs to use digital picture improvement, displaying an OSD menu proposing to choose preferences (figure 4c), as for instance, luminance, details, sharpness, chrominance ;
   - if the user instructs to change a preference, modifying the corresponding parameter in memory 56.

   The OSD menu can also propose to the user to go back to default settings of the various preferences.
   In a second period of time, the user activates playback (PB) of a video tape. The VCR will then reproduce the content of the tape according to the memorised preferences. This consists for the micro-processor 26 mainly in :
(c) reading parameters in the memory 56;
(d) controlling the analog unit 14, the digital unit 16, the path switch 22 and the monitor switch 18 accordingly.

In controlling the circuit of figure 4a when a VHS tape is inserted and the play-back mode is launched (instruction from user on receiver 58 to micro-processor 26), the steps are :
- receiving an information on the type of tape from detection means 62 ;
- reading in the memory 56 the parameters corresponding to reproducing a tape of said type, for instance the parameters corresponding to VHS playback as previously entered ;
- if the parameters indicate digital picture improvement has not been selected, controlling the monitor switch 18 to connect the output of the analog unit 14 to the input of the display 20 ;
- if the parameters indicate digital picture improvement is selected, controlling the path switch 22 to connect the output of the analog unit 14 to the input of the video decoder 28, controlling the second switch 46 to connect the output of the MPEG encoder 30 to the input of the MPEG decoder 34, controlling the monitor switch 18 to connect the output of the video encoder 36 to the display 20 and sending instructions to the video decoder 28 according to the parameters.

The user can thus easily determine how he wants to benefit from the digital unit 16 even when using the analog unit 14 for reproduction.

The process of operation of the VCR during VHS or S-VHS trick modes has advantageously the following features :
- when pause is requested, the path switch 22 allows the video signal out of the analog unit 14 to be processed through the digital unit 16 and a pause instruction is given to the MPEG decoder 34, the monitor switch 18 connecting the video encoder 36 to the display 20;
- when forward or backward search is selected, the monitor switch 18 allows direct connection of the analog unit 14 to the display 20.

Such features have advantages has described below.

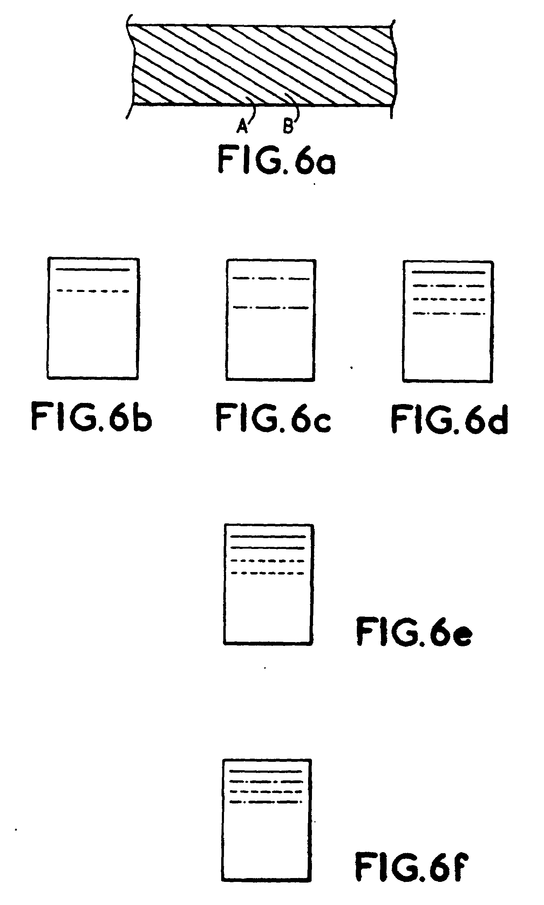

According to the conventional VHS and S-VHS standards, the analog signal representing an image is recorded on the tape on slanted tracks, as represented on figure 6a. A first half of the lines of an image (i.e. 312 ½ lines for PAL/SECAM, and 262½ for NTSC) are recorded on a single track A ; figure 6b gives an example of the first two lines recorded on track A. The second half of the lines of the image are recorded on the following track B; figure 6c gives an example of two such lines.

The lines from each track A, B are interlaced as represented schematically on figure 6d. As it is well known, though the images represented at figures 6b and 6c respectively are not displayed exactly at the same time, the retinal persistence of the user makes him see the image as represented on figure 6d.

When the user requests the video to pause (pause mode), the tape is stopped and the drum keeps reading the same track, for instance track A. The information of the previous or the following track is therefore not available because conventional analog units have no memory to store a part of the image ; at the opposite, the video signal which is read from the tape is directly sent to the display.

In a conventional VCR, the image which is displayed during pause mode is therefore as represented on figure 6e, where the lines of track A are each displayed twice. The resolution is thus divided by two in pause mode.

In a VCR according to the invention, as represented on figure 4a, if the user chooses to let the analog signal read from a VHS tape go through the digital unit as previously described (digital picture improvement), the images with full resolution (*i*.*e*. information from both tracks A and B) are stored in the memory of the MPEG decoder 34.

Thus, when the user requests pause mode (*i*.*e*. when a pause signal is received by the micro-processor 26 via the receiver 58), the micro-processor 26 requests a still image to the MPEG decoder 34 ("freeze picture"), which keeps on sending the image (schematically represented on figure 6f) with full resolution to the display 20 via the video encoder 36.

Then, in a following step, the motion of the tape is stopped and the drum will keep reading the same track. It is important to notice that the image which is then continuously displayed is the last image which had been received by the MPEG decoder 34 before the pause button was pressed, thus with full resolution, though the analog unit keeps sending a half resolution image, because this half resolution image is ignored by the MPEG decoder 34 which is in "freeze" mode.

Alternatively, this can apply not only when the user selects digital picture improvement but also during conventional reproduction of a VHS or S-VHS tape (monitor switch 18 linking analog unit 14 to display 20).

According to this variation, during reproduction of a tape (normal speed), the path switch 22 connects the output of the analog unit 14 to the input of the video decoder 28 and, the second switch 46 connects directly the MPEG encoder 30 to the MPEG decoder 34 (so that the MPEG decoder 34 receives the video signal), but the monitor switch 18 connects the output of the analog unit 14 to the display 20 (as conventional reproduction of VHS or S-VHS is selected).

When the pause button is pressed, the micro-processor 26 will not only send a pause instruction ("freeze image") to the MPEG decoder 34, but also automatically switch the monitor switch 18 to connect the video encoder 36 to the display 20. Then, in a following step, the motion of the tape is stopped and the drum will keep reading the same track, as in the previous solution.

It is thus taken advantage of the digital unit 16 even during analog reproduction of a tape from the analog unit 14.

It should also be pointed out that the video encoder 36 can output video signals according to three well-known types : CVBS, S-Video and RGB. Thus, when reading a VHS tape, the analog unit 14 outputs a CVBS signal, but the display 20 can receive a S-Video or even a RGB signal (which quality is better) thanks to the passing of the video signal through the digital unit 16.

The teachings of the invention also apply when the analog unit 14 outputs a S-Video signal when reading a S-VHS tape. Instead of one wire for VHS (CVBS signal), the video signal in S-Video is coded on two wires (Y and C: luminance and chrominance). There is thus two path switches 22, one for luminance, one for chrominance.

As a further advantage of this solution, no vertical jitter takes place during pause mode as the displayed image comes from the video encoder 36 where no synchronisation problems occur.

In addition, these results do not depend on the norm of the tape used with regards to the norm of the drum unit 24. For instance, when reading a VHS tape recorded under NTSC norm with a drum dedicated to PAL/SECAM, the results with conventional solutions were correct during play-back (reproduction at normal speed), but some problems occurred when in pause mode. The invention also gets rid of such problems.

The digital picture improvement as described above has many advantages as it has been explained. However, it could happen during forward or backward search (reproducing with higher speed of the tape than recorded, in same or opposite direction) that passing the analog signal from the analog unit 14 through the digital unit 16 generates digital artefacts, notably macroblocks could appear.

It is therefore proposed that the monitor switch 18 automatically connects the output of the analog unit 14 to the display 20 during forward search and during backward search, that is when a search signal is received by the micro-processor via the receiver 58.

The scope of the invention is not limited to the previous embodiments. It is notably possible to use the steps relating to search modes independently from the steps relating to pause mode.

## Claims

1. Process for controlling a video cassette recorder with :
- an analog recording and reproducing unit (14) having an output for a first baseband analog video signal;
- a digital recording and reproducing unit (16) having an input for a second baseband analog video signal and digital processing means (28, 30, 34, 36) generating on an output of said digital unit (16) a third baseband analog video signal;
- a path switch (22) allowing connection of the output of the analog unit (14) to the input of the digital unit (16),
including the step of:
- instructing the digital processing means (36; 34) to generate a still picture.

2. Process for controlling a video cassette recorder according to claim 1, wherein the video cassette recorder comprises a drum unit (24) notably able to drive a tape into motion, including the successive steps of:
- instructing the digital processing means (36 ; 34) to generate a still picture;
- instructing the drum unit (24) to stop the tape motion.

3. Process for controlling a video cassette recorder according to claim 1, wherein the video cassette recorder comprises a micro-processor (26), wherein the step of instructing the digital processing means (36 ; 34) to generate a still picture takes place immediately when a pause signal is received by the micro-processor (26).

4. Process for controlling a video cassette recorder according to claim 1, wherein the video cassette recorder further comprises a monitor switch (18) to selectively connect the output of the analog unit (14) or the output of the digital unit (16) to an output of the monitor switch (18) connectable to a display (20), further including the step of:
- instructing the monitor switch (18) to connect the output of the digital unit (16) to the output of the monitor switch (18) when a pause signal is received by the micro-processor (26).

5. Process for controlling a video cassette recorder according to claim 1, wherein the video cassette recorder comprises a micro-processor (26), wherein the digital processing means comprises a video encoder (36) and wherein the step of instructing the digital processing means to generate a still picture is realised by an instruction from the micro-processor (26) to the video encoder (36).

6. Process for controlling a video cassette recorder according to claim 1, wherein the video cassette recorder comprises a micro-processor (26), wherein the digital processing means comprises a MPEG decoder (34) and wherein the step of instructing the digital processing means to generate a still picture is realised by an instruction from the micro-processor (26) to the MPEG decoder (34).

7. Process for controlling a video cassette recorder according to claim 1, wherein the video cassette recorder further comprises a micro-processor (26) and a monitor switch (18) to selectively connect the output of the analog unit (14) or the output of the digital unit (16) to an output of the monitor switch (18) connectable to a display (20), including the step of:
- instructing the monitor switch (18) to connect the output of the analog unit (14) to the output of the monitor switch (18) when a search signal is received by the micro-processor (26).
